# EUROPÄISCHE PATENTANMELDUNG

(11) **EP 1 674 784 A2**
(43) Veröffentlichungstag der Anmeldung: **28.06.2006**
(21) Anmeldenummer: 05112855.1
(22) Anmeldetag: 23.12.2005
(51) Int. Cl.: F16M 11/10

(54) **Anordnung zur Schwenkung eines im Wesentlichen flachen Gehäuses einer elektronischen Vorrichtung**

(30) Priorität: 23.12.2004 DE 102004061999
(71) Anmelder: ROBERT BOSCH GMBH, 70442 Stuttgart (DE)
(72) Erfinder: Watermann, Fred, 31141 Hildesheim (DE)

(57) **Zusammenfassung**

Um eine Anordnung zum Schwenken eines im Wesentlichen flachen Gehäuses einer elektronischen Vorrichtung, für die Offenlegung eines hinter dem Gehäuse liegenden Schachtes oder dergleichen, bei welcher das Gehäuse über eine Drehachse schwenkbar gelagert ist und um einen Winkel α zwischen einer Offenstellung und einer Schließstellung schwenkbar ist, wobei die Drehachse von einem Lager geführt ist, zu schaffen, bei welcher eine abrupte Abbremsung der Schwenkbewegung vor Erreichen des unteren Totpunktes verhindert wird und welche dadurch einem geringeren Verschleiß unterliegt, ist vor-gesehen, dass ein Reibschluss zwischen der Drehachse (16) und dem Lager (14) in einem ersten Teilwinkelbereich (β) des Öffnungswinkels (α) größer ist als in einem zweiten Teilwinkelbereich (γ) des Öffnungswinkels (α), wobei der Teilwinkelbereich (β) sich beginnend an der Offenstellung des Gehäuses in Richtung der Schließstellung erstreckt.

## Beschreibung

### Technisches Gebiet

Die Erfindung betrifft eine Anordnung zur Schwenkung eines im Wesentlichen flachen Gehäuses einer elektronischen Vorrichtung gemäß dem Oberbegriff des Anspruchs 1.

### Stand der Technik

Es ist bekannt, das Gehäuse einer elektronischen Vorrichtung zu schwenken, um einen hinter dem Gehäuse liegenden Schacht dadurch offen zu legen. Beispielsweise kann in einem Kraftfahrzeug die in einem flachen Bauteil angeordnete Navigationseinrichtung in ihrem Winkel so verstellt werden, dass ein Zugriff auf den hinter ihr liegenden Medienschacht und dadurch das Auswechseln einer Audiokassette oder dergleichen ermöglicht wird.

Ein Problem bekannter Anordnungen dieser Art besteht darin, dass das flache Bauteil bei der Öffnung des Medienschachtes vor Erreichen des unteren Totpunktes nicht abgebremst wird. Das auf die Drehachse wirkende Drehmoment wird während des Öffnungsvorgangs aufgrund der Erdanziehung im Allgemeinen vergrößert, und die Drehbewegung des Bauteils kann dem ausgeübten Moment ungehindert folgen. Die dadurch entstehende ruckartige Abbremsung des Bauteils führt nicht nur zu einem von den Kraftfahrzeuginsassen unangenehm empfundenen Geräusch, sondern auch zu einer hohen mechanischen Beanspruchung am Lagerpunkt.

### Darstellung der Erfindung, Aufgabe, Lösung, Vorteile

Es ist Aufgabe der vorliegenden Erfindung, eine gattungsgemäße Anordnung anzugeben, bei welcher eine abrupte Abbremsung der Schwenkbewegung vor Erreichen des unteren Totpunktes verhindert wird und welche dadurch einem geringeren Verschleiß unterliegt.

Erfindungsgemäß wird diese Aufgabe mittels einer Anordnung mit den im Anspruch 1 genannten Merkmalen gelöst.

Dadurch, dass ein Reibschluss zwischen der Drehachse und dem Lager in einem ersten Teilwinkelbereich β des Öffnungswinkels α größer ist als in einem zweiten Teilwinkelbereich γ des Öffnungswinkels α, wobei der Teilwinkelbereich β sich beginnend an der Offenstellung des Gehäuses in Richtung der Schließstellung erstreckt, wird bei der Drehbewegung des Gehäuses vor dem Erreichen der Offenstellung ein zusätzliches Drehmoment generiert, welches die Drehbewegung abbremst und somit die Drehgeschwindigkeit verringert. Dadurch wird vorteilhaft erreicht, dass die Erzeugung eines lauten Aufprallgeräusches sowie ein erhöhter Verschleiß der Bauteile unterdrückt wird.

In bevorzugter Ausgestaltung der Erfindung ist vorgesehen, dass der größere Reibschluss in dem ersten Teilwinkelbereich β durch den Kontakt zwischen einem an der Drehachse ausgebildeten Nocken und dem Lager verursacht ist. Dadurch erfolgt eine kontinuierlich steigende negative Drehbeschleunigung des Gehäuses, wodurch die ungewünschte Erzeugung von mechanischen Schwingungen verhindert wird.

Weitere bevorzugte Ausgestaltungen der Erfindung ergeben sich aus den übrigen, in den Unteransprüchen genannten Merkmalen.

### Kurze Beschreibung der Zeichnungen

Nachstehend wird die Erfmdung in einem Ausführungsbeispiel anhand der beigefügten Zeichnungen näher erläutert. Es zeigen:
Fig. 1a eine Seitenansicht der erfmdungsgemäßen Anordnung in Schließstellung;
Fig. 1b einen vergrößerten Ausschnitt eines Bereiches nahe der Drehachse in Figur 1a;
Fig. 2a eine Seitenansicht der erfindungsgemäßen Anordnung in Offenstellung und
Fig. 2b einen vergrößerten Ausschnitt eines Bereiches nahe der Drehachse in Figur 2a.

### Bester Weg zur Ausführung der Erfindung

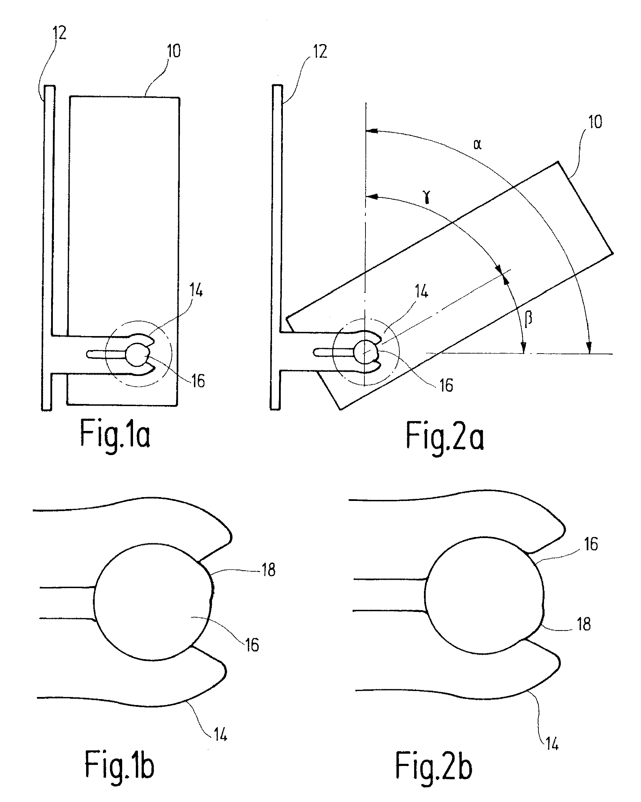

Figur 1a zeigt eine Seitenansicht der erfindungsgemäßen Anordnung in Schließstellung. Eine in einem flachen Gehäuse angeordnete Navigationseinrichtung 10 ist an einem die Öffnung eines nicht näher dargestellten Medienschachtes begrenzenden Rahmen 12 montiert. Zur Ermöglichung des Zugriffs auf den Medienschacht ist die Navigationseinrichtung 10 in einem Lager 14 um die Drehachse 16 schwenkbar gelagert. Dabei ist die Drehachse 16 zwischen zwei Armen des Lagers 14 eingeklemmt. Figur 1b zeigt einen vergrößerten Ausschnitt eines Bereiches nahe der Drehachse in Figur 1a. Die Drehachse 16 weist einen Nocken 18 auf, welcher in der Schließstellung keinen Kontakt zu einem der beiden Arme des Lagers 14 aufweist. Wird die Navigationseinrichtung 10 nun geschwenkt (Figur 2a), so dass der Medienschacht offen gelegt wird, so wird auch der Nocken 18 rotiert (Figur 2b) und gerät in Reibungskontakt mit einem der beiden Arme des Lagers 14. Durch den erhöhten Reibschluss wird ein Drehmoment auf die Drehachse 16 ausgeübt, welches bewirkt, dass die Drehbewegung der Navigationseinrichtung 10 abgebremst wird, bis sie ihre untere Totpunktstellung erreicht hat, in welcher das Drehmoment auf Null sinkt. Die erfindungsgemäße Anordnung von Nocken und Lager dient somit als Bremsvorrichtung zur Verzögerung der Öffnungsbewegung. Die Erzeugung eines Aufprallgeräusches bei Erreichen des unteren Totpunktes und gleichermaßen ein erhöhter Verschleiß der entsprechenden Bauteile wird verhindert.

## Patentansprüche

1. Anordnung zum Schwenken eines im Wesentlichen flachen Gehäuses einer elektronischen Vorrichtung , für die Offenlegung eines hinter dem Gehäuse liegenden Schachtes oder dergleichen, bei welcher das Gehäuse über eine Drehachse schwenkbar gelagert ist und um einen Winkel α zwischen einer Offenstellung und einer Schließstellung schwenkbar ist, wobei die Drehachse von einem Lager geführt ist,
**dadurch gekennzeichnet,**
**dass** ein Reibschluss zwischen der Drehachse (16) und dem Lager (14) in einem ersten Teilwinkelbereich ( ) des Öffnungswinkels ( ) größer ist als in einem zweiten Teilwinkelbereich ( ) des Öffnungswinkels ( ), wobei der Teilwinkelbereich ( ) sich beginnend an der Offenstellung des Gehäuses in Richtung der Schließstellung erstreckt.

2. Anordnung nach Anspruch 1,
**dadurch gekennzeichnet, dass**
der größere Reibschluss in dem ersten Teilwinkelbereich ( ) durch den Kontakt zwischen einem an der Drehachse (16) ausgebildeten Nocken (18) und dem Lager (14) verursacht ist.

3. Anordnung nach einem der vorangehenden Ansprüche,
**dadurch gekennzeichnet, dass**
die im Lager (14) im Wesentlichen die Form einer Gabel vorweist.

4. Anordnung nach einem der vorangehenden Ansprüche,
**dadurch gekennzeichnet, dass**
die elektronische Vorrichtung ein Navigationssystem in einem Kraftfahrzeug oder dergleichen und/oder der hinter dem Gehäuse liegende Schacht ein Medienschacht zur Aufnahme von Audiokassetten oder dergleichen ist.
